# EUROPEAN PATENT APPLICATION

(11) **EP 1 044 830 A1**
(43) Date of publication of application: **18.10.2000**
(21) Application number: 00830282.0
(22) Date of filing: 14.04.2000
(51) Int. Cl.: B60C 25/135, B60C 25/138

(54) **Protection ring for lorry tire rims for use during the assembly and disassembly of tires**

(30) Priority: 15.04.1999 IT AN990017
(71) Applicant: Mondolfo Ferro - S.P.A., 61027 Mondolfo (PS) (IT)
(72) Inventor: Petrolati, Liviano, 61027 Mondolfo (PS) (IT)
(74) Representative: Baldi, Claudio

(57) **Abstract**

The present invention relates to a protection ring for application on lorry light alloy tire rims before loading them on the machines used for tire assembly and disassembly.

The ring externally features a cylindrical surface ending with an annular flange (1c) and provided with a through radial notch (2), it being provided that the external surface of the ring features a perimetral groove (1d) used to exactly house an "OR" ring.

## Description

The present patent application relates to a protection ring for application on lorry light alloy tire rims before loading them on the machines used machines used for tire assembly and disassembly.

As it is known, the assembly and disassembly of vehicle tires - including lorries - are currently carried out with suitable machines capable of ensuring the permanent stop of the vehicle tire rim required to perform the next operations.

To this end, the machines use an hydraulic jack with horizontal axis, whose stem supports and actuates a kind of pliers made up of four divaricable claws placed at 90°, each of them supporting a jaw capable of sliding in horizontal direction.

In particular, the four rear ends of the claws are hinged to a suitable frame fixed to the bearing jack, so that the free front ends can open like an umbrella.

When the machine is in idle state, the stem of the bearing jack is located at the end of the stroke in the rear part, i.e. housed inside the machine casing. The pliers remains closed and the four jaws applied onto the claws are located at the end of the stroke in the rear part.

To disassemble a tire, the tire rim must be placed close to the machine so that the central hole of the tire rim is aligned with the pliers of the machine.

Then the stem of the jack must be moved forward with respect to the machine casing, while the four jaws horizontally slide with respect to the claws of the pliers until they reach the end of the stroke in the front part.

In this phase the jaws remain in closed position in order to form a pin that can be exactly inserted into the central hole of the tire rim, pushed by the progressive forward movement of the stem of the bearing jack of the machine.

Once the pin has been completely inserted into the tire rim hole, the four claws of the pliers divaricate until the jaws interfere with the edge of the tire rim hole.

Then the four jaws are moved backward in order to make the tire rim slide until the end of the stroke where it is stopped against a suitable surface provided within the support frame of the pliers.

Once the tire rim has been strongly fixed, it will be possible to use the other tools of the machine to detach the tire from the rim or, alternatively, to couple them.

Although extremely popular, this technology is impaired by a significant disadvantage that especially occurs when disassembling (or assembling) a tire from lorry light alloy tire rims. As a matter of fact, this type of tire rims will be very much used in the near future, thanks to their lower weight compared to traditional tire rims, being this an advantage for the net load capacity of the lorries.

In particular, during the operation of the machines that are currently used for tire assembly or disassembly, the metal jaws in charge of interfering with the edge of the tire rim hole inevitably cause evident irreversible scratches that severely damage the overall aesthetics of the tire rim.

In particular, the scratches occur because the tire rim is not mounted onto the machine in perfectly perpendicular position with respect to the bearing jack. For this reason, the four jaws externally feature a truncated conical profile in order to automatically and progressively centre the tire rim during the divarication.

In fact, one of the jaws may initially interfere with the front edge of the tire rim, while the interference of the other jaws occurs in a sequential order during the automatic centring of the tire rim simultaneously with the progressive divarication of the jaws.

For this reason, it appears evident that a relative sliding movement is produced between the tire rim edge and the internal truncated conical profile of the jaw, which, combined with the heavy forces, provokes the surface scratching of the tire rim. More precisely, a scratch is produced for each jaw in which the relative sliding of the tire rim occurred.

The risk of scratching becomes even higher during the next operation, when the tire rim, due to the backward movement of the jaws, is stopped against the fixed surface. It must be noted that the pressure used to hold the tire rim in this position is extremely high, in view of the need to contrast the strong forces of the tools on the tire in order to extract it from the channel of the tire rim.

This explains the reason why this inconvenience is particularly felt in the presence of lorry, and not car tire rims, when the force of the tools is much lower, just like the force of the jaws to hold the tire rim against the surface.

It must be said that in the last few years the sector operators have tried to solve the aforementioned inconvenience of lorry light alloy tire rims. However, the solutions adopted so far are not fully satisfactory.

As a first solution, the ends of the sliding jaws of the machine were covered with plastic protection covers in order to avoid the production of scratches on the edge of the rim hole.

This remedy, however, has not proved efficacious, in view of the fact that the plastic covers tend to plastically deform, if not tear, due to the strong forces discharged on them during their use.

Alternatively, a kind of aluminium cover was mounted at the ends of the jaws.

The cover featured a "cradle" shape, that is a "U" transversal section capable of exactly receiving the edge of the rim hole. This was done to limit the relative sliding between the tire rim and the jaws, which is the main cause of the scratches.

This solution, however, did not find advantageous application due to the discomfort caused to the machine operators.

As a matter of fact, the thickness of the edge of the hold in the different models of tire rim is not standard and considerably changes according to the manufacturer. Therefore, the aluminium covers cannot be for universal use and it would be necessary to mount a specific version on the machine jaws according to the specific thickness of the tire rim.

In any case, this type of cover does not eliminate the risk of scratching the edge of the tire rim, since the section of the cover must always be larger than the thickness of the tire rim edge. If not, the tire rim could not be inserted into it. The space existing between the edge of the tire rim hole and the cover of the "U" cradle determines a small relative sliding that, especially when the tire rim is place at the end of the stroke in rear position against the surface, can scratch the external surface of the tire rim.

Based on these considerations, the invention according to the present patent application has been devised, which is capable of overcoming all the typical drawbacks of the aforementioned technique.

The invention consists in an aluminium protection ring incorporating an external flange along the entire perimeter on one side. The function of the ring is to cover and protect the edge of the tire rim hole.

The ring is designed to be manually inserted into the central hole of the tire rim through a small interference caused by the presence of an "OR" ring, until the external flange stops against the annular area that surrounds the central hole on the front wall of the tire rim and covers it.

When the machine jaws divaricate progressively, the ring further divaricates until it strictly fits against the edge of the hole, before retracting the jaws. At this regard, it must be noted that the possibility of elastic divarication for the ring is ensured by the presence of a radial notch that interrupts its structural continuity.

In any case, it appears evident that the installation of the protection ring prevents the machine jaws from directly interfering with the edge of the tire rim hole. In this way, the jaws can only interfere against the external surface of the ring, thus avoiding damaging and scratching the tire rim.

The interposition of the protection ring between the machine jaws and the front face of the tire rim also guarantees the tire rim integrity. It ensures that the strong force of the jaws in four single points of the external face of the protection ring is transmitted to the external face of the tire rim on the entire perimeter of the ring and therefore more uniformly and gently.

Apart from its capability of protecting the integrity of the tire rim, the ring according to the invention is extremely advantageous also in terms of limited cost, fast easy assembly/disassembly from a tire rim and high versatility, being suitable - as explained in detail in the following description - for installation on all lorry tire rims whose central hole has a thickness equal or higher than the ring.

From this viewpoint, the higher functionality of the ring with respect to the previous covers for the machine jaws appears evident. As mentioned above, the covers must be realised in different versions according to the possible thickness of the tire rim.

For major clarity the description of the invention continues with reference to the enclosed drawings, which are intended for purposes of illustration and not in a limiting sense, whereby:
- Fig. 1 is the front view of the protection ring according to the invention;
- Fig. 2 is a side view of the ring, half view and half cross-section;
- Fig. 3 is a cross-section of a tire rim complete with the tire and the protection ring in a machine used for tire assembly/disassembly.

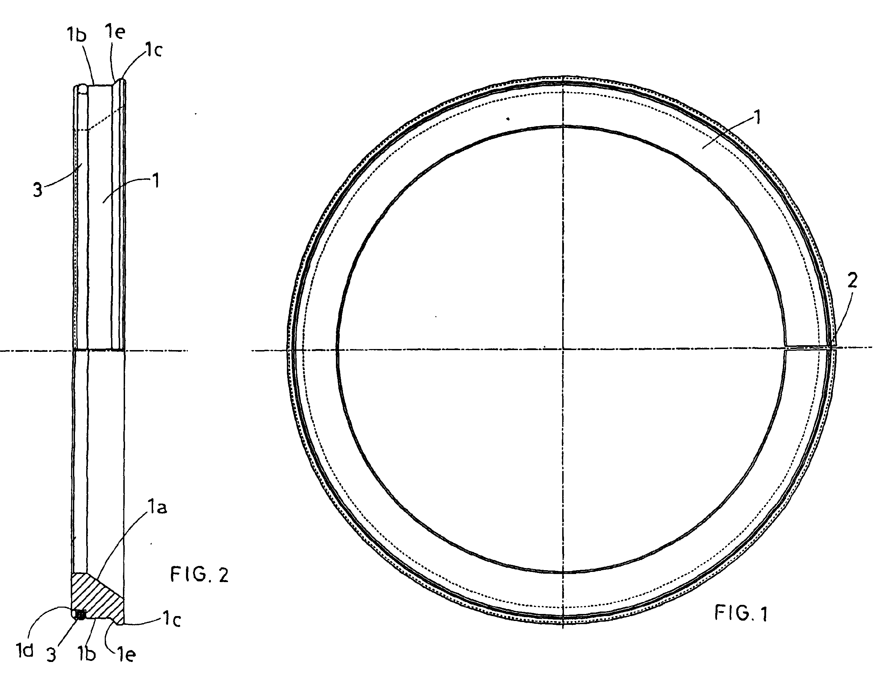

With reference to Fig. 1, the invention consists in a metal protection ring (1), preferably made of aluminium, with a radial notch (2) that interrupts the structural continuity and permits its elastic divarication.

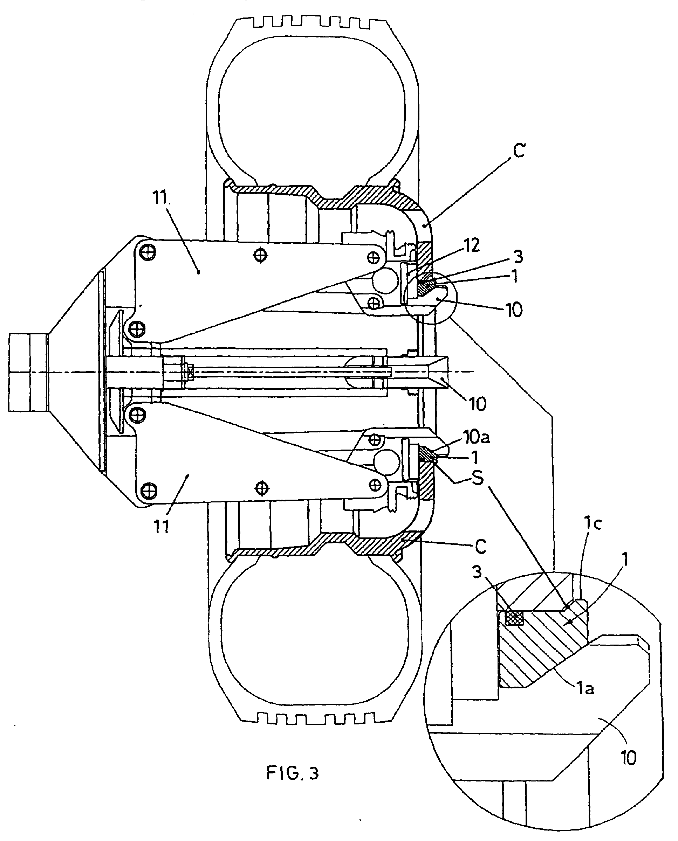

With reference to Figs. 2 and 3, the ring (1) internally has a truncated conical surface (1) capable of exactly coupling with the identical external profile (10a) of the sliding jaws (10) mounted at the ends of the divaricating claws (11) of the machine (M). The ring (1) externally has a cylindrical surface (1b) ending with an annular flange (1c).

With particular reference to Fig. 3, the ring (1) is inserted into the hole of the tire rim (C) until the flange (1c) stops against the external wall of the tire rim (C).

As regards the practical application of the ring (1) to the tire rim (C), it must be said that, in idle state, the diameter of the ring (1) is slightly lower than the hole of the tire rim. It must also be noted that on its external cylindrical surface (1b) the ring (1) features a perimetral groove (1d) that exactly houses an "OR" ring (3).

The fact that the diameter of the ring (1) is lower than the hole of the tire rim (C) allows the operator to rapidly insert it into the hole of the tire rim (C), by taking advantage of the space that exists between the ring (1) and the hole of the tire rim (C). The presence of the "OR" ring (3) on the external side of the ring (1) allows for creating a mutual forcing between the ring (1) and the edge of the tire rim (C) that prevents their accidental descoupling before the operation of the machine jaws (10).

Once the jaws (10) start divaricating, thus interfering against the ring (1), thanks to the presence of the radial notch (1) the ring (1) can progressively divaricate, increasing its diameter, until its external surface (1b) exactly stops against the edge of the hole of the tire rim (C).

It must be noted that in the version of the invention shown in the aforementioned figures, the external cylindrical surface (1b) and the flange (1c) are joined by means of a tilted border (1e).

The tilted border (1e) is capable of perfectly coupling - when the ring (1) has been completely inserted into the hole of the tire rim (C) - with the rounded perimetral corner (S) that is generally provided on each light alloy tire rim in intermediate position between its front surface and the edge of the central hole.

The presence of the tilted border (1e) is important to avoid visible damage on the tire rim (C) in case of accidental sliding between the ring (1) and the tire rim (C) when the machines jaws are moved backwards.

As a matter of fact, during the accidental sliding movement, the only risk of scratching would be between the tilted border (1e) of the ring and the rounded corner (S) of the tire rim (C), that is in an area of the tire rim (C) not visible from the outside.

Finally, the thickness of the ring (1) must be equal or lower than the tire rim (C).

The reason for it is that when the tire rim (C) with the ring (1) is held by the jaws (10) against the surface (12) located on the machine frame, the back wall of the ring (1) must not hit the surface (12) before the internal wall of the tire rim (C).

In fact, when coupling the ring (1) with the tire rim (C) in the central hole, this would allow the tire rim to freely move under the lateral throws that are necessary to disassemble the tire, thus recreating the possible risk of tire rim damage in the central hole area, that the ring (1) according to the invention intends to avoid.

## Claims

1. Metal protection ring for lorry tire rims, characterised in that it externally has a cylindrical surface (1b) ending with an annular flange (1c) and a through radial notch (2); it being provided with a perimetral groove (1d) on the external surface (1c) to exactly house an "OR" ring (3).

2. Metal protection ring for lorry tire rims according to claim 1, characterised in that the external cylindrical surface (1b) and the terminal flange (1c) are coupled by means of a tilted border (1e).

3. Metal protection ring for lorry tire rims according to claim 1, characterised in that the internal profile (1a) is capable of exactly coupling with the external profile (10a) of the jaws of the machine (M) used for tire assembly and disassembly.
